(19) Europäisches Patentamt
European Patent Office
Office européen des brevets

(11) **EP 3 805 475 B1**

(12) **EUROPÄISCHE PATENTSCHRIFT**

(45) Veröffentlichungstag und Bekanntmachung des Hinweises auf die Patenterteilung:
**17.04.2024 Patentblatt 2024/16**

(21) Anmeldenummer: **20198532.2**

(22) Anmeldetag: **25.09.2020**

(51) Internationale Patentklassifikation (IPC):
*E04B 1/58* $^{(2006.01)}$       *E04G 7/20* $^{(2006.01)}$
*E04H 15/44* $^{(2006.01)}$       *F16L 41/02* $^{(2006.01)}$

(52) Gemeinsame Patentklassifikation (CPC):
**E04B 1/585;** E04B 2001/5887; E04G 7/20;
E04H 15/44; F16L 41/021; F16L 41/023

(54) **HALTERUNG FÜR STABFACHWERKE**

HOLDER FOR LATTICE FRAMEWORK

SUPPORT POUR TREILLIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.10.2019 DE 102019127192**

(43) Veröffentlichungstag der Anmeldung:
**14.04.2021 Patentblatt 2021/15**

(73) Patentinhaber: **PoeKon GmbH**
**61137 Schöneck (DE)**

(72) Erfinder: **Dr. Poetsch, Hans Gero**
**61137 Schöneck (DE)**

(74) Vertreter: **Wickord, Wiro**
**Wickord Buser Patentanwälte PartG mbB**
**Rathenaustraße 96**
**33102 Paderborn (DE)**

(56) Entgegenhaltungen:
**DE-A1-102017 122 415    US-A- 3 424 178**

## Beschreibung

Die Erfindung betrifft ein Verfahren zur Herstellung von Halterungen für beliebige Fachwerke aus Stäben, Rohren oder Balken, die zum Verbinden der Stäbe, Rohre oder Balken dienen. Ferner betrifft die Erfindung die Halterungen, die nach dem Verfahren herstellt sind.

Im Folgenden wird der Einfachheit halber nur noch von Stäben gesprochen, auch wenn Rohre oder Balken ohne Einschränkungen ebenfalls verwendet werden können und insofern vom Begriff Stäbe mit umfasst sind. Die Halterungen können für Stäbe mit unterschiedlicher Stabquerschnittsform erstellt werden. Bei einfacher, beispielsweise kreisförmiger, Stabquerschnittsform ist die Berechnung besonders einfach.

## Stand der Technik

Bekannte Halterungen lassen sich in verschiedene Gruppen insbesondere in Bezug auf den Preis, die Belastbarkeit oder die Verwendung einteilen.

Beispielsweise sind als Massenprodukt hergestellte Halterungen für einfache Gerüste, zum Beispiel Rankgerüste für Pflanzen, bekannt. Diese sind häufig sehr preisgünstig, was hauptsächlich durch die Massenfertigung bedingt ist, weisen aber keine hohe Belastbarkeit auf. Meist handelt es sich um Gebilde mit mehreren rohrartigen

Öffnungen, die eine einfache Konstruktion aufweisen. Die mechanische Belastbarkeit ist gering, da diese Halterungen häufig knickartige Übergänge an der Oberfläche aufweisen, an denen bei Belastungen hohe Kerbspannungen entstehen.

Ähnliche Halterungen existieren für Baugerüste, hier ist durch die Materialwahl eine bessere Belastbarkeit gegeben. Häufig ist hier der Materialeinsatz hoch, der zur Erreichung der sicherheitsbedingt erforderlichen Stabilität betrieben wird.

Weiter bekannt sind Halterungen aus Vollmaterial (beispielsweise Kugeln oder zylindrische Scheiben), in die zur Aufnahme der Fachwerksstäbe Löcher gebohrt wurden. Diese Halterungen sind relativ stabil, haben aber ein unverhältnismäßig hohes Eigengewicht. Der entsprechend hohe Materialaufwand führt zu einem relativ hohen Preis.

Darüber hinaus existieren Halterungen mit Gelenken oder elastischen Komponenten, die beim Einbau eine gewisse Flexibilität ermöglichen, danach aber keine Funktion mehr erfüllen. Die mechanische Belastbarkeit der Gelenke liegt unterhalb derer einfachen Vollmaterials, die Flexibilität beim Einbau führt zu einem hohen Preis. Ferner sind Halterungen mit spezieller Geometrie bekannt, die in der Regel eigens für Anwendungen wie beispielsweise aus Stangen zusammengesteckte Kuppelzelte entworfen sind. Ähnlich wie bei den Halterungen für Rankgerüste werden auch hier üblicherweise einfache rohrförmige Strukturen so miteinander kombiniert, dass ein Gebilde entsteht, in das die Fachwerkstäbe eingesteckt werden können. Die Berechnung für den speziellen Anwendungsfall ist relativ aufwendig und rechtfertigt die hinsichtlich Materialaufwand und Belastbarkeit erzielten Ergebnisse oft nicht.

Aus der DE 10 2017 122 415 A1 ist darüber hinaus ein Konstruktionsverfahren für Leichtbauteile bekannt, bei dem mit Methoden der Strukturmechanik ein Stabfachwerk durch ein Knoten-Kanten-Modell abgebildet wird.

US3424178 offenbart alle Merkmale des Oberbegriffes des Anspruchs 1.

## Aufgabenstellung

Aufgabe der Erfindung ist es, eine Halterung für Stäbe von Fachwerken anzugeben, die einerseits anwendungsspezifisch in kleinen Stückzahlen kostengünstig entworfen und produziert werden kann, andererseits auch für Standardanwendungen gut geeignet ist und in großen Stückzahlen produziert werden kann. Dabei sollen die Schwachpunkte gängiger Konstruktionen vermieden werden, namentlich einerseits ein unverhältnismäßig hoher Materialaufwand und andererseits die Anfälligkeit gegenüber mechanischer Belastung. Ferner ist es Aufgabe der Erfindung, ein Verfahren für die normierte und automatisierte Berechnung und Herstellung dieser Halterungen anzugeben, wobei das Herstellverfahren für die Halterungen unabhängig von der Anwendung ist. Das Verfahren soll für allgemein konstruierte Fachwerke anwendbar sein und dadurch eine automatische Halterungsauslegung und -konstruktion ermöglichen, die die wirtschaftliche Fertigung von Halterungen auch bei kleinen Stückzahlen begünstigt.

## Lösung der Aufgabe

Zur Lösung der Aufgabe weist die Erfindung die Merkmale der unabhängigen Patentansprüche 1 und 8 auf.

Demzufolge umfasst die erfindungsgemäße Halterung zum Verbinden von wenigstens drei Stäben zu einem Stabfachwerk einen Körper mit wenigstens drei zur Aufnahme der Stäbe gebildeten Halterungslöchern, wobei die Halterungslöcher eine zu einer Stabquerschnittsform korrespondierende Lochquerschnittsform und eine Lochtiefe aufweisen, die so bemessen ist, dass die Stäbe positionsgenau an dem Körper festlegbar sind, wobei eine Außenmantelfläche des Körpers abschnittsweise durch eine Äquipotentialfläche von Linienladungen beschrieben ist, wobei die Linienladungen durch die Lage und die Stabquerschnittsform der an dem Körper festgelegten Stäbe definiert sind. Hierfür wird eine Funktion für das Linienpotential $V_L$ verwendet, die aus einer erzeugenden Punktpotential-Funktion $V_P \sim 1/r^n$ abgeleitet wird, wobei $r$ der Abstand des Punktes, für den das Potential berechnet werden soll, zum Ort der Punktladung und $n \geq 1$ und $n$ ganzzahlig ist.

Das erfindungsgemäße Herstellverfahren sieht vor, dass zunächst das Fachwerk definiert wird, für das die Halterungen berechnet werden sollen, indem alle Fachwerksknoten sowie die Lage, Anzahl und Querschnittsform der zwischen den Fachwerksknoten vorgesehenen Stäbe festgelegt werden, dass dann für Linienladungen, welche durch die Lage und die Querschnittsform der an dem Körper festgelegten Stäbe definiert sind, eine Äquipotentialfläche berechnet wird, wobei ein Mindestabstand zwischen der Äquipotentialfläche und einem beliebigen Stab des Fachwerks vorgegeben wird, dass dann Grenzen der Äquipotentialflächen bestimmt werden, dass dann die sich an die Äquipotentialflächen anschließenden Übergangsflächen berechnet werden und dass dann für jedes Halterungsloch eine Lochquerschnittsform und eine Lochtiefe den Vorgaben entsprechend konstruiert werden.

Der besondere Vorteil der Erfindung besteht darin, dass die Halterung durch die variable Gestaltungsweise für eine Vielzahl verschiedener Anwendungen angepasst werden kann. Beispielsweise können die Halterung und/oder das erfindungsgemäße Verfahren Anwendung finden für Spiel- und Klettergerüste, Rankgerüste für Pflanzen beziehungsweise bei Fachwerken für Kräne oder Brücken. Das Berechnungsverfahren ist dabei stets gleichartig mit der Folge, dass die erfindungsgemäße Halterung sehr flexibel genutzt werden kann. Eine Verwendung im Bereich der Einzelbeziehungsweise Kleinserienfertigung kommt dabei ebenso in Frage wie die Nutzung bei der Massenfertigung. Eine Anpassung in Bezug auf die Größe, Festigkeit, Steifigkeit oder andere anwendungsspezifische Merkmale kann durch entsprechende Vorgabe der Parameter des Entwurfsverfahrens erfolgen. Darüber hinaus besteht die Möglichkeit der Beeinflussung durch das Fertigungsverfahren und das Material, aus dem die Halterungen hergestellt werden können.

Die über die Äquipotentialflächen beschriebene Außengeometrie des Körpers ist zugleich formschön und harmonisch. Zudem können Kerbspannungen durch die glatte Außenmantelfläche vermieden werden.

Sobald die Geometrie der Halterungen mathematisch bestimmt beziehungsweise festgelegt ist, können die Halterungen beispielsweise urformend oder additiv mittels Rapid Prototyping aus Kunststoff oder Metall gefertigt werden. Beispielsweise ist es möglich, die Halterungen spanabhebend aus Metall oder Holz herzustellen. Jeweils kann das Fertigungsverfahren unter Berücksichtigung der Festigkeitsanforderungen an die Halterung, eine Materialvorgabe und die Stückzahl individuell festgelegt werden. Ein übermäßiger Materialaufwand kann bei Wahrung der geforderten Festigkeit vermieden werden.

## Detaillierte Beschreibung der Erfindung

Die Erfindung wird nachfolgend im Detail beschrieben und unter Bezugnahme auf die Zeichnungen näher erläutert. Die Zeichnungen zeigen Ausführungsbeispiele der Erfindung. Die Erfindung ist nicht auf diese Ausführungsbeispiele beschränkt.

Es zeigen:

Fig. 1         eine Prinzipdarstellung eines Verbindungspunkts eines Stabfachwerks (auch Fachwerksknoten genannt),

Fig. 2a       ein Gitter als eine erste Variante eines ebenen Stabfachwerks,

Fig. 2b       ein Tsumiishi Kikko-Zierfachwerk als eine zweite Variante eines ebenen Stabfachwerks,

Fig. 2c       ein Hexaeder-Fachwerk als eine erste Variante eines räumlichen Fachwerks,

Fig. 2d       ein Ikosaeder-Fachwerk als eine zweite Variante eines räumlichen Fachwerks,

Fig. 3         eine perspektivische Detaildarstellung einer erfindungsgemäßen Halterung,

Fig. 4         eine Darstellung zur Konstruktion einer Übergangsfläche mit Ellipsen,

Fig. 5         eine perspektivische Darstellung einer erfindungsgemäßen Halterung, berechnet auf Basis eines Linienpotentials mit $n = 1$ ("elektrisches Linienpotential"),

Fig. 6a       eine erste Anordnung einer Linienladung zur Abbildung unterschiedlicher Stabquerschnittsformen,

Fig. 6b       eine zweite Anordnung einer Linienladung zur Abbildung unterschiedlicher Stabquerschnittsformen,

Fig. 6c    eine dritte Anordnung einer Linienladung zur Abbildung unterschiedlicher Stabquerschnittsformen,

Fig. 6d    eine vierte Anordnung einer Linienladung zur Abbildung unterschiedlicher Stabquerschnittsformen,

Fig. 7a    eine perspektivische Darstellung einer erfindungsgemäßen Halterung mit sechs Stabaufnahmen,

Fig. 7b    eine perspektivische Darstellung einer erfindungsgemäßen Halterung mit vier Stabaufnahmen,

Fig. 7c    eine erste perspektivische Darstellung einer erfindungsgemäßen Halterung mit drei Stabaufnahmen,

Fig. 7d    eine zweite perspektivische Darstellung einer erfindungsgemäßen Halterung mit drei Stabaufnahmen,

Fig. 7e    eine dritte perspektivische Darstellung einer erfindungsgemäßen Halterung mit drei Stabaufnahmen,

Fig. 8    eine perspektivische Darstellung einer erfindungsgemäßen Halterung mit Verzierungen an der Oberfläche,

Fig. 9    eine perspektivische Darstellung einer erfindungsgemäßen Halterung mit nutförmigen Vertiefungen zur Aufnahme von Platten,

Fig. 10a    eine erste, schlankere Variante der Halterung nach Fig. 7b und

Fig. 10b    eine zweite, voluminösere Variante der Halterung nach Fig. 7b.

## Ansatz zur Konstruktion einer erfindungsgemäßen Halterung

Der Konstruktionsansatz für die erfindungsgemäßen Halterungen 1 basiert darauf, Stäbe 2 des Fachwerkes zunächst gedanklich durch Linien 3 zu ersetzen. Das Fachwerk wird somit durch ein einfaches, aus mehreren solcher Linien 3 bestehendes Netz beschrieben. Nun wird für jede Linie 3 eine Potentialfunktion definiert. Durch Superposition der Potentiale aller Linien 3 erhält man eine Potentialfunktion für den gesamten Raum.

Die Äquipotentialflächen 6 dieser Funktion umhüllen das gesamte linienförmige Fachwerks-Netz in Analogie zu Zwiebelschalen. Für einen bestimmten Potentialwert ist eine eindeutige, das Fachwerk umhüllende Fläche definiert, die als Ausgangspunkt für die Konstruktion der Halterung 1 verwendet werden kann.

Am einfachsten und anschaulichsten ist die Verwendung einer Funktion für das Linienpotential, wie sie für das elektrische Feld geladener Linienleiter berechnet werden kann. In diesem Fall werden die Fachwerkskanten gedanklich durch elektrisch geladene Linienleiter ersetzt. Tatsächlich kann diese Potentialfunktion für die Halterungskonstruktion verwendet werden, allerdings zeigt sich, dass aus bestimmten Gründen eine Modifikation empfehlenswert ist.

## Grundsätzlicher Aufbau der Halterungen

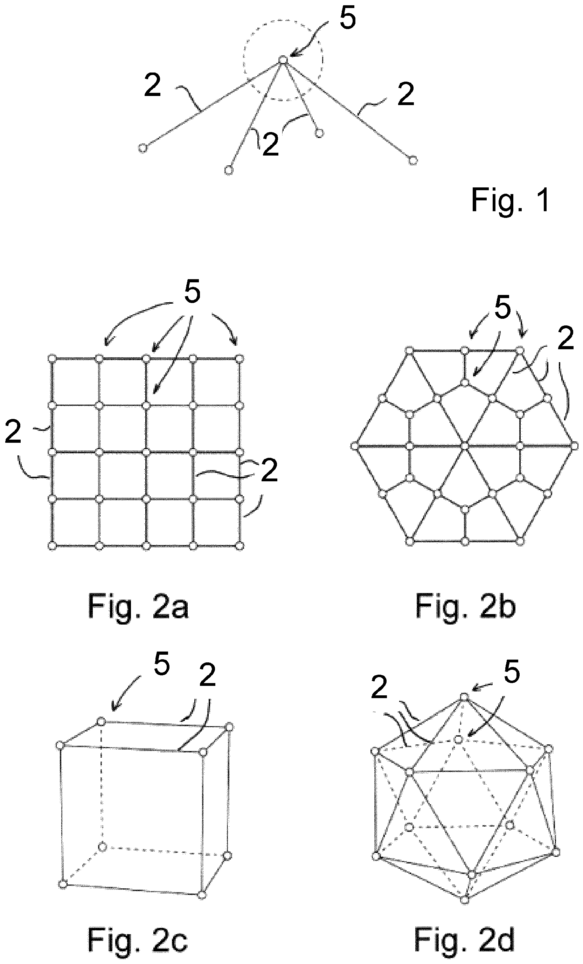

Das Prinzip wird nachfolgend anhand der Fig. 1 und 2 veranschaulicht. Fig. 1 zeigt einen Ausschnitt aus einem Fachwerk, und zwar eine Verbindungsstelle 5, an der mehrere Stäbe 2 miteinander verbunden werden sollen. Diese Aufgabe wird durch die Halterung 1 bewerkstelligt, deren räumliche Lage hier aber nur durch eine gestrichelte Linie angedeutet ist. In Fig. 2 sind beispielhaft verschiedene Fachwerke dargestellt, die dort in Form ihrer Knoten-Kanten-Geometrie abgebildet sind.

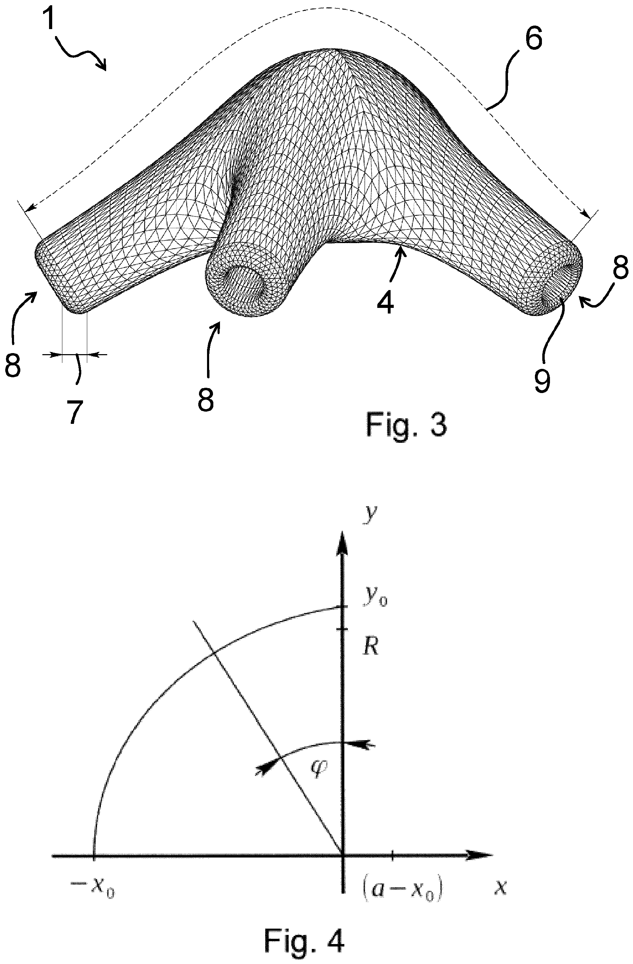

Das Verfahren zur Berechnung der Halterungen 1 wird nachfolgend detailliert beschrieben. Um die verwendeten Bezeichnungen zu erklären, wird unter Bezugnahme auf Fig. 3 aber zunächst der Aufbau einer nach dem beschriebenen Ansatz berechneten Halterung 1 erläutert.

Die Halterung 1 umfasst einen Körper 4 mit einer Oberfläche, die in mehrere Bereiche unterteilt ist:

1. Die schon erwähnte Äquipotentialfläche 6, die als Resultat einer Potentialberechnung für das Linienfachwerk bestimmt wird. Da die Äquipotentialfläche die Kanten des Linienfachwerks in ihrer gesamten Länge umgibt, wird sie für die Verwendung als Teil der Halterungsoberfläche räumlich begrenzt. Die geometrische Begrenzung der Äquipotentialfläche erfolgt durch einen vorab festgelegten Mindestabstand zum Fachwerksknoten, wodurch die Länge des Teils der Fachwerksstäbe definiert wird, der von der Halterung umschlossen wird.

2. Übergangsflächen 7, die eine kontinuierliche Verbindung (ohne Sprünge oder Knicke) zwischen Äquipotentialfläche 6 und Halterungslöchern 8 herstellen.

3. Die Löcher 8 zur Aufnahme der Fachwerksstäbe 2. Die Stäbe 2 sind in Fig. 3 exemplarisch kreisrund ausgeführt, es sind aber auch andere Stab- und korrespondierend andere Lochquerschnittsformen möglich.

4. Eine Fase 9 (optional), die ein leichteres Einführen der Stäbe 2 in die an dem Körper 4 vorgesehenen Löcher 8 der Halterung 1 ermöglicht.

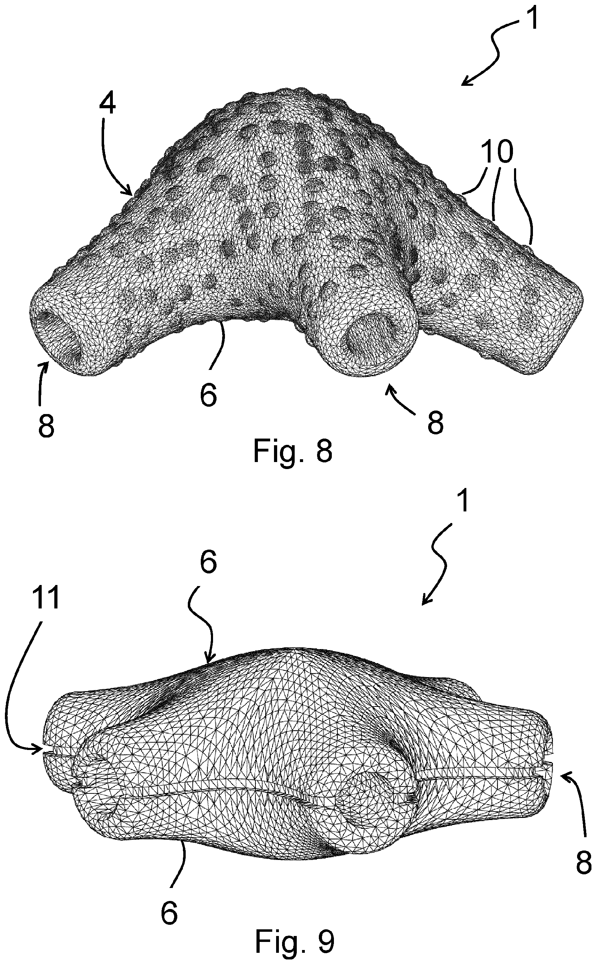

5. Ebenfalls optional kann zwischen benachbarten Löchern 8 noch eine nutförmige Vertiefung vorgesehen werden, so dass zwischen Stäben 2 und Halterungen 1 Platten eingepasst werden können, um die Oberfläche des Fachwerkes zu schließen. Die in Fig. 3 nicht dargestellten Vertiefungen 11 für die Platten sind exemplarisch in Fig. 9 für die dortige Halterung 1 gezeigt.

**Das Berechnungsverfahren**

Der Geometrie der Halterung 1 wird erfindungsgemäß wie folgt festgelegt:

1. Wenn die Fachwerksgeometrie durch Definition der Koordinaten aller Fachwerksknoten beziehungsweise Verbindungsstellen 5 festgelegt ist, kann sofort die Potentialberechnung erfolgen.

2. Aus der Schar der möglichen Potentialflächen 6, die sich durch den jeweiligen Potentialwert auf der Fläche unterscheiden, ist für die Halterungsoberfläche 1 die Auswahl einer geeigneten Äquipotentialfläche zu treffen. Durch diese Festlegung kann eine ausreichende Stabilität bei angemessenem Materialaufwand erreicht werden. Im Berechnungsablauf wird zur Ermittlung des Potentialwertes der Äquipotentialfläche zunächst ein feines Dreiecksnetz um jede Fachwerkskante herum erzeugt, das in jedem Netzpunkt genau den vorgegebenen Mindestabstand zur Staboberfläche besitzt. In jedem Netzpunkt erfolgt nun eine Potentialberechnung. Der kleinste berechnete Wert aller Punkte ist der gesuchte Potentialwert. Da das Potential mit zunehmender Entfernung zur Fachwerkskante stetig abnimmt, haben alle Punkte der anschließend zu berechnenden Potentialfläche einen größeren Abstand zur Staboberfläche als den vorgegebenen Mindestabstand.

3. Anschließend erfolgt die Berechnung der Äquipotentialfläche 6. Hierzu wird wiederum ein Dreiecksnetz um die Linienladungen herum konstruiert, in dessen Knoten 5 die Koordinaten iterativ mit beliebiger Genauigkeit bestimmt werden. Bei entsprechender Ortsauflösung des Dreiecksnetzes wird damit die Äquipotentialfläche 6 ebenfalls beliebig genau durch dieses Netz abgebildet.

4. An den die Äquipotentialfläche 6 begrenzenden Kanten, an denen sich die Übergangsflächen 7 zu den Halterungslöchern 8 anschließen, erfolgt dann neben der Koordinatenberechnung auch eine Gradientenberechnung. Hierdurch ist es möglich, die Übergangsflächen 7 zu den Halterungslöchern 8 sprung- und knickfrei an die Äquipotentialfläche 6 anzuschließen.

5. Die Übergangsflächen 7 werden durch geeignete Funktionen berechnet, so dass sie sich sprung- und knickfrei an die Äquipotentialfläche 6 anschließen und senkrecht auf dem Rand der Halterungslöcher 8 (beziehungsweise einer gegebenenfalls vorhandenen Fase 9) enden. Dazu wird eine "glatte" Funktion mit drei Parametern benötigt, was beispielsweise bei der Verwendung von Ellipsenabschnitten gewährleistet ist.

6. Optional erfolgt anschließend eine Berechnung der Fasen 9.

7. Darauf erfolgt die Berechnung der Halterungslöcher 8. Diese beiden Schritte sind vergleichsweise trivial, da hier die Geometrie der Fachwerkstäbe 2 zugrunde gelegt wird.

8. Schließlich und optional kann die Äquipotentialfläche 6 noch mit kleinen Oberflächenverzierungselementen 10 versehen werden, wenn dies aus ästhetischen Gründen gewünscht ist oder wenn die Halterung 1 aus anderen Gründen eine strukturierte Oberfläche erhalten soll. Dies wird bewerkstelligt, indem im Berechnungsmodell in der Nähe der bereits berechneten Äquipotentialfläche 6 zusätzliche Potentialträger mit lokalem Charakter platziert werden (beispielsweise Punktladungen, Dipole oder physikalische Dipole, Liniendipole oder physikalische Liniendipole). Die hierdurch eingebrachten Änderungen im Potentialfeld schlagen sich dann nach einem zweiten Berechnungsdurchlauf im Berechnungsergebnis für die Oberfläche nieder.

9. Soll das Fachwerk zwischen Stäben 2 und Halterungen 1 eine geschlossene Oberfläche durch Platten erhalten, dann können Halterung 1 und Stäbe 2 mit Vertiefungen beziehungsweise Nuten versehen werden, die der formschlüssigen Aufnahme dieser Platten dienen.

**Formeln zur Potentialberechnung**

Die Potentialberechnung bildet den Kern des Berechnungsverfahrens für die Halterungen. Zur Berechnung des Potentials des Linienfachwerks sind dabei lediglich Formeln für die Potentiale einzelner Fachwerkskanten bereitzustellen, da sich das Potential im Gesamtraum durch Überlagerung (Summation) der Potentiale aller einzelnen Kanten ergibt.

Die Vorgehensweise zur Berechnung der Linienpotentiale wurde aus der Potentialtheorie der Elektrotechnik übernommen. Dort wird das Potential einer Linienladung berechnet, indem diese in differentiell kleine Abschnitte unterteilt wird, die das Potential $V_{P,1}$ einer Punktladung besitzen:

$$V_{P,1} = \frac{1}{4\pi\varepsilon}\frac{Q}{r} \tag{F1}$$

Hier bedeuten:

$V_{P,1}$    Potential einer Punktladung
$\pi$    Kreiszahl $\pi$
$\varepsilon$    Dielektrizitätskonstante
$Q$    elektrische Ladung
$r$    Abstand des Punktes, für den das Potential berechnet werden soll, zum Ort der Punktladung

Die Konstanten können in einem Parameter $\kappa = Q/(4\pi\varepsilon)$ zusammengefasst werden:

$$V_{P,1} = \kappa\frac{1}{r} \tag{F2}$$

Das Linienpotential $V_{L,1}$ für einen Linienleiter der Länge $L$, dessen Mittelpunkt im Koordinatenursprung liegt und der sich von $x=-L/2$ bis $x=L/2$ erstreckt, ergibt sich durch Integration aus der Funktion des erzeugenden Punktpotentials $V_{P,1}$ zu:

$$V_{L,1} = \kappa \int_{-L/2}^{L/2} \frac{1}{[(\zeta-x)^2+\rho^2]^{1/2}}\,d\zeta = \ldots = \kappa \ln\left(\frac{x+L/2+\sqrt{(x+L/2)^2+\rho^2}}{x-L/2+\sqrt{(x-L/2)^2+\rho^2}}\right) \tag{F3}$$

Dabei bezeichnen $x$ die Koordinate in Längsrichtung des Linienleiters und $\rho$ die Koordinate in radialer Richtung, für die Integrationsvariable wurde die Bezeichnung $\zeta$ gewählt. Der Index "1" in $V_{P,1}$ und $V_{L,1}$ wurde hier im Vorgriff auf eine nachfolgend erläuterte Formelerweiterung eingeführt, die die Verwendung eines zusätzlichen Index erfordert, der in den vorstehenden Formeln F1 bis F3 den Wert 1 annimmt.

Eine Untersuchung dieser Funktion zeigt, dass Äquipotentialflächen 6 die Linie 3 konzentrisch umschließen und dass das Potential für kleine Werte von $\rho$ gegen Unendlich strebt, für zunehmende Werte von $\rho$ hingegen stetig abnimmt. Für die Halterungsberechnung bedeutet dies, dass hier eine starke "Nahwirkung" jeder Kante vorliegt. Das Potential in der nahegelegenen Umgebung einer Kante wird durch die Potentiale weiter entfernter Kanten kaum beeinflusst. Nur in der unmittelbaren Umgebung der Fachwerksknoten 5, also dort, wo Stäbe 2 zusammengeführt sind und/oder die Halterung 1 angebracht wird, treten wesentliche Überlagerungseffekte auf.

Dieser gewünschte Effekt lässt sich noch verstärken, indem der Ansatz für die Funktion des erzeugenden Punktpotentials etwas allgemeiner gefasst wird, nämlich:

$$V_{P,n} = \kappa\frac{1}{r^n} \tag{F4}$$

Dabei ist der Exponent $n$ ganzzahlig und es gilt $n \geq 1$.

Mit zunehmendem Wert von $n$ wird das Nahfeld (für kleine Werte von $r$) größer, das Fernfeld (für große Werte von $r$) nimmt stark ab. Das Linienpotential $V_{L,n}$ wird wieder durch Integration bestimmt:

$$V_{L,n} = \kappa \int_{-L/2}^{L/2} \frac{1}{[(\zeta-x)^2+\rho^2]^{n/2}} d\zeta \qquad (F5)$$

Zu berücksichtigen ist hier der Exponent n/2 im Nenner.

Das Ergebnis für $n = 1$ gibt Formel F3 an. Für $n = 2 .. 4$ sind die Ergebnisse der Integration wie folgt:

$$V_{L,2} = \frac{\kappa}{\rho}\left\{\left[arctan\left(\frac{L/2-x}{\rho}\right)\right] + \left[arctan\left(\frac{L/2+x}{\rho}\right)\right]\right\} \qquad (F6)$$

$$V_{L,3} = \frac{\kappa}{\rho^2}\left\{\left[\left(\frac{L/2-x}{\sqrt{(L/2-x)^2-\rho^2}}\right)\right] + \left[\left(\frac{L/2+x}{\sqrt{(L/2+x)^2+\rho^2}}\right)\right]\right\} \qquad (F7)$$

$$V_{L,4} = \frac{\kappa}{2\rho^3}\left\{\begin{array}{c}\left[\frac{\rho(L/2-x)}{(L/2-x)^2-\rho^2}\right] + \left[\frac{\rho(L/2+x)}{(L/2+x)^2+\rho^2}\right] + \\ \left[arctan\left(\frac{L/2-x}{\rho}\right)\right] + \left[arctan\left(\frac{L/2+x}{\rho}\right)\right]\end{array}\right\} \qquad (F8)$$

Für die meisten Anwendungen ist die Verwendung von $V_{L,2}$ besonders interessant, da diese Funktion ein deutlich schwächeres Fernfeld als das gewöhnliche elektrische Potential $V_{L,1}$ aufweist. $V_{L,3}$ oder $V_{L,4}$ wird man als Ansatzfunktionen insbesondere dann wählen, wenn Halterungen für geringe mechanische Belastungen mit äußerst wenig Material entworfen werden sollen. Diese Ansatzfunktionen haben ein sehr schwaches Fernfeld, so dass bei ihrer Anwendung die Halterungsoberfläche im Wesentlichen der Form der Stäbe 2 entspricht, die von einer Schale annähernd konstanter Dicke umhüllt werden. Potentialfunktionen für $n > 4$ könnten zwar per Integration ebenfalls bestimmt werden, allerdings erscheint die Anwendung nur wenig sinnvoll, da die Bereiche, in denen diese Funktionen noch einen signifikanten Beitrag zu den Potentialfunktionen anderer Fachwerkskanten leisten, eine örtlich sehr geringe Ausdehnung besitzen.

Um die Potentialfunktionen in einheitlicher Weise bei der Halterungsberechnung zu verwenden, wird das Linienpotential vorteilhaft als gewichtete Summe geschrieben:

$$V_L = \sum_{i=1}^{4} \eta_i V_{L,i} \qquad (F9)$$

Durch Wahl der Koeffizienten $\eta_i$ wird die Gewichtung der Potentialfunktionen gewählt. So kann beispielsweise mit $\eta_1 = 1$, $\eta_2 = 0$, $\eta_3 = 0$ und $\eta_4 = 0$ mit dem "elektrischen Potential" $V_{L,1}$ gerechnet werden, während bei $\eta_1 = 0$, $\eta_2 = 1$, $\eta_3 = 0$ und $\eta_4 = 0$ das "1/$r^2$-Potential" $V_{L,2}$ verwendet wird. Daneben sind auch Mischformen realisierbar, beispielsweise mit $\eta_1 = 0,05$, $\eta_2 = 0,9$, $\eta_3 = 0,05$ und $\eta_4 = 0$.

Die in der Elektrotechnik gängige Vorgehensweise der Potentialberechnung wird hiermit in den Bereich der Konstruktionstechnik übertragen, wobei durch die Verallgemeinerung der Formel für $n = 1... 4$ eine Neuerung eingeführt wurde, durch die dem Verwendungszweck angepasste, mechanisch besonders vorteilhafte Strukturen definiert werden können.

**Formel zur Berechnung der Übergänge**

Damit zwischen Äquipotentialfläche 6 und Loch- oder Fasenrand ein stetiger und knickfreier Übergang realisiert werden kann, muss für die Übergangsfläche 7 eine Funktion verwendet werden, die an die Äquipotentialfläche 6 steigungsstetig anschließt und auf dem Loch- oder Fasenrand endet. Dies kann durch eine Schar von Ellipsen bewerkstelligt werden, deren Parameter so bestimmt werden, dass die genannten Forderungen erfüllt sind.

Fig. 4 zeigt eine Skizze zur Berechnung der Ellipsen. Das Koordinatensystem ist derart gewählt, dass die x-Achse parallel zur Fachwerkskante verläuft, der Punkt $(x_F, y_F) = (-x_0, 0)$ auf dem Fasen- oder Lochrand liegt und der Punkt $(x_R, y_R) = (0, y_0)$ auf dem Rand der Äquipotentialfläche 6 liegt. In der Ellipsengleichung

$$\frac{(x - a + x_0)^2}{a^2} + \frac{y^2}{b^2} = 1$$

werden die Parameter *a* und *b* so bestimmt, dass $y(x = 0) = y_0$ und $y'(x = 0) = y'_0$ ist. Es ergibt sich

$$a = x_0 \frac{y_0 - x_0 y'_0}{y_0 - 2x_0 y'_0}$$

und

$$b^2 = a^2 \frac{y_0^2}{x_0^2} \frac{y_0 - 2x_0 y'_0}{y_0}.$$

Damit ist die Ellipse eindeutig definiert. Die Berechnung einzelner Punkte ($x_P$, $y_P$) erfolgt durch Vorgabe des Winkels $\varphi$ wischen der Ursprungsgeraden durch diese Punkte und der Ordinate, siehe Fig. 4. Mit dem Ursprungsabstand $r$ des Punktes lauten seine Koordinaten

$$\left(x_P, y_P\right) = \left(-r_\varphi \sin(\varphi), r_\varphi \cos(\varphi)\right).$$

Setzt man diese Werte in die Ellipsengleichung ein, dann erhält man den Wert von $r_\varphi$ als Lösung der quadratischen Gleichung

$$r_\varphi^2\left(b^2\sin^2\varphi + a^2\cos^2\varphi\right) - r_\varphi 2b^2(a - x_0)\sin\varphi + b^2(a - x_0)^2 = a^2 b^2 \qquad \text{(F10)}.$$

Hier bedeuten:

a      Halbachsen-Parameter der Ellipse in x-Richtung
b      Halbachsen-Parameter der Ellipse in y-Richtung
$x_0$      Lageparameter der Ellipse in x-Richtung
$y_0$      Lageparameter der Ellipse in y-Richtung
$y'_0$      Steigungsparameter der Ellipse im Punkt (0, yo)
$\varphi$      vorgegebener Winkel bezüglich der Linienladung, unter dem ausgehend vom Koordinatenursprung ein Punkt auf der Übergangsellipse zu berechnen ist
$r_\varphi$      Entfernung des Ellipsenpunktes zum Koordinatenursprung, dessen Verbindungsgerade zum Ursprung mit der Linienladung den Winkel $\varphi$ bildet

**Auswirkung der Ansatzfunktion**

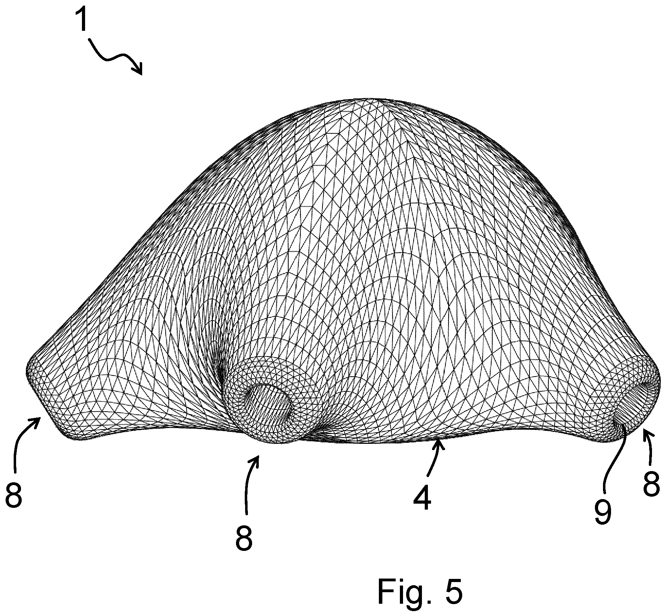

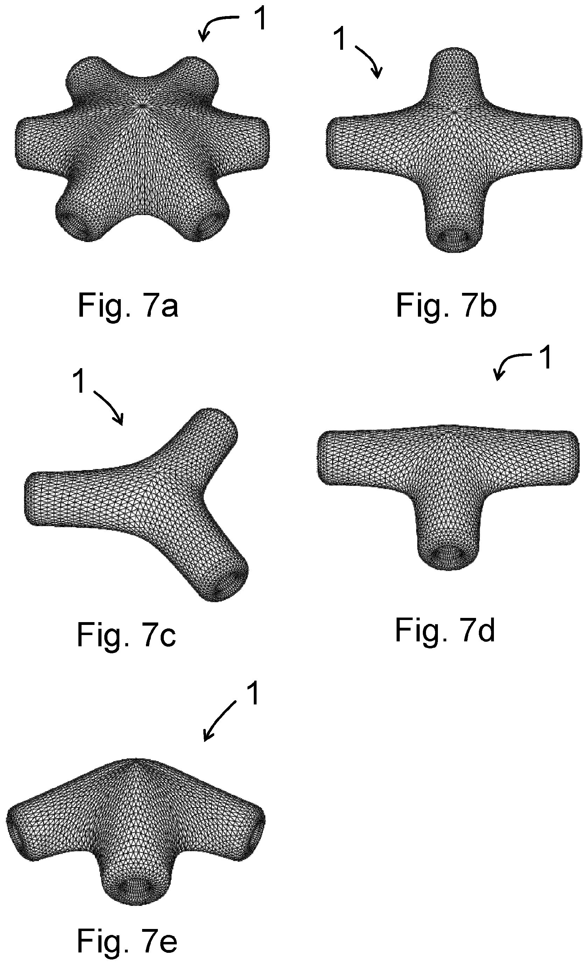

Nachdem die Berechnungsgrundlagen für Äquipotentialfläche und Übergangsflächen beschrieben sind, soll hier kurz auf den schon genannten Punkt eingegangen werden, dass die Wahl des "elektrischen Linienpotentials" mit *n = 1* nur in bestimmten Fällen sinnvoll erscheint und die modifizierten Ansatzfunktionen mit *n = 2...4,* insbesondere *n = 2,* sich in der Praxis oft als sinnvoller erweisen. Das Ergebnis einer Berechnung mit *n = 1* ist in Fig. 5 dargestellt, wobei die Eingangsdaten identisch gewählt wurden wie bei der in Fig. 3 gezeigten Halterung, bei der ein Linienpotential mit *n = 2* verwendet wurde. Es ist deutlich zu erkennen, dass aus der Berechnung mit *n = 1* zwar ebenfalls eine brauchbare Halterungsform resultiert, allerdings mit einem erheblichen zusätzlichen Materialbedarf. Die Berechnung mit *n = 1* wird daher nur dann Anwendung finden, wenn eine Halterung mit besonders massiver Form gewünscht wird.
Unterschiedliche Halterungen 1 für Fachwerksknoten (5), welche beispielsweise für das Tsumiishi Kikko-Zierfachwerk nach Fig. 2b Verwendung finden können, sind in den Fig. 7a bis 7e dargestellt.

**Berücksichtigung der Querschnittsform der Stäbe**

Die Querschnittsform der Stäbe 2 kann bei der Halterungsberechnung berücksichtigt werden, ohne dass grundlegende Änderungen des Verfahrens vorgenommen werden müssen.
Werden die Fachwerkskanten im Berechnungsmodell, so wie beschrieben, direkt als Träger von Linienpotentialen verwendet, dann sind die resultierenden Halterungen besonders gut für die Aufnahme kreisförmiger Stäbe 2 geeignet. Dies ist darauf zurückzuführen, dass die Äquipotentialflächen 6 einzelner Linienladungen rotationssymmetrisch sind. Die Form der Halterungsoberfläche weicht hiervon nur in der näheren Umgebung der Fachwerksknoten 5 ab, wo sich die Linienpotentiale benachbarter Fachwerkskanten signifikant überlagern.

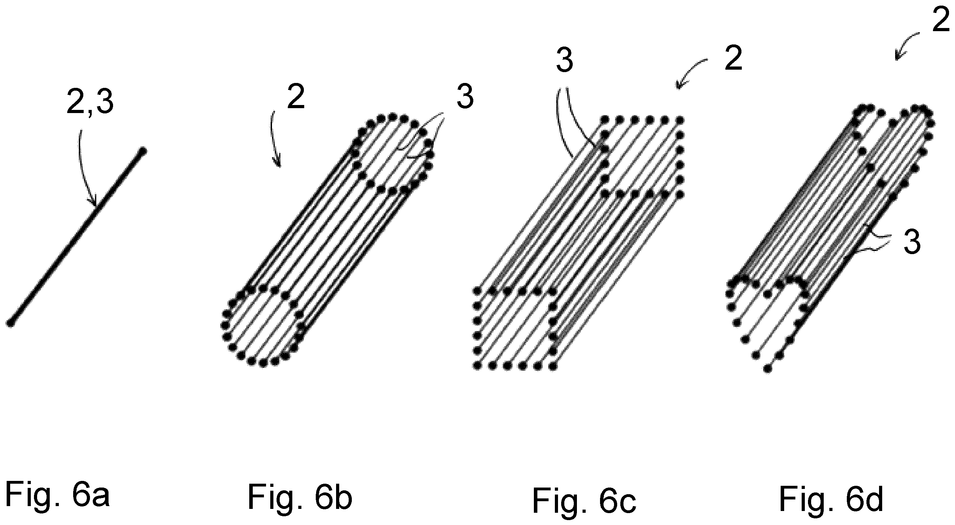

Soll die Halterung für Stäbe 2 mit einer Querschnittsform berechnet werden, die von der Kreisform abweicht, dann kann dies geschehen, indem die Querschnittsform der Stäbe 2 durch mehrere Linienpotentiale nachgebildet wird, die parallel zur Fachwerkskante verlaufen, siehe Fig. 6a bis 6d. Für diese Linien 3 werden die Potentiale mit den hergeleiteten Formeln berechnet, und auch die Verwendung von Ellipsen zur Berechnung der Übergangsflächen kann nach dem beschriebenen Prinzip erfolgen.

### Verzierung der Halterungsoberfläche

Die Berechnung der Halterungsoberfläche auf Basis von Potentialfunktionen gestattet es, diese Fläche in einem zweiten Berechnungslauf auf einfache Weise zu modifizieren. Hierzu werden Ladungsträger mit schwach ausgeprägtem Fernfeld innerhalb der berechneten Äquipotentialfläche 6 platziert. Die Halterung 1 wird dann nach demselben Verfahren wie zuvor erneut berechnet mit dem Unterschied, dass die hinzugefügten Ladungsträger in die Berechnung mit einbezogen werden. Als Ladungsträger kommen zwei Varianten in Betracht: Zum einen Punktladungen mit Potential $V_P = c/r^n$, bei denen die Konstante $c$ und der Exponent $n$ so gewählt werden, dass das Potential nur in einer kleinen Umgebung des Ladungsträgers signifikant beeinflusst wird, was insbesondere für große Werte von $n$ der Fall ist. Zum anderen können Ladungsträger aus zwei in geringer Entfernung zueinander befindlichen Ladungen gleichen Betrages und unterschiedlichen Vorzeichens kombiniert werden (physikalische Dipole). Dann heben sich deren Potentiale in größeren Entfernungen nahezu vollständig auf, und auch hier verbleibt ein Einfluss in unmittelbarer Nähe dieser Ladungsträger. Das Ergebnis einer Berechnung mit physikalischen Dipolen ist in Fig. 7 dargestellt. Dort wurden die Ladungswerte der Dipole mit Rücksicht auf die Darstellbarkeit in der Liniengrafik relativ groß gewählt. Durch Wahl kleinerer oder größerer Ladungswerte kann die Größe der so entstehenden Erhebungen direkt beeinflusst werden, die Erzeugung fein strukturierter Oberflächen ist ohne weiteres möglich. Neben punktförmigen Ladungsträgern können auch Linienladungen oder Liniendipole eingesetzt werden, um längliche Erhebungen auf der Äquipotentialfläche zu erzeugen.

### Vertiefung zur Aufnahme von Platten im Fachwerk

Bei bestimmten Anwendungen kann es sinnvoll sein, das Fachwerk nicht als reines Stabfachwerk auszuführen, sondern die von den Stäben umschlossenen Flächen zu schließen, indem dort Platten eingefügt werden. Diese Platten können in Vertiefungen 11 beziehungsweise Nuten eingepasst werden, die in den Stäben vorgesehen werden. Damit keine Lücken zwischen der Halterung 1 und den Platten auftreten, kann auch die Halterung 1 mit einer nutförmigen Vertiefung 11 versehen werden, in die die Platten eingepasst werden. Fig. 9 zeigt eine Halterung 1 mit einer derartigen Vertiefung 11. Die Fertigung einer solchen Vertiefung ist mit einfachen Mitteln (z. B. abrasiv mit Scheibenfräser) auch bei einer Halterung ohne Vertiefung noch nachträglich möglich, da die Mittellinie der Vertiefung in einer Ebene liegt. Alternativ kann die Vertiefung 11 insbesondere bei der urformenden und/oder additiven Fertigung unmittelbar als Teil der Halterung 1 vorgesehen werden.

### Beispiel für die Durchführung der Halterungsberechnung

Um die Funktionsweise des Verfahrens aus Sicht eines Anwenders zu verdeutlichen, wird nachfolgend ein Berechnungsablauf für die Halterung 1 in einem einfach aufgebauten, kreuzförmigen Fachwerk beschrieben. Die Halterung 1 entspricht der in Fig. 7b dargestellten.

Der Knotenpunkt des Fachwerkes, für den die Halterung 1 berechnet werden soll, habe die Koordinaten (0,0,0). Die Koordinaten der benachbarten Fachwerkspunkte besitzen die Koordinaten (1,0,0), (0,1,0), (-1,0,0) und (0,-1,0). Jeweils ist die z-Koordinate der Knotenpunkte 0, es handelt sich demzufolge um ein ebenes Fachwerk.

Der Berechnungsablauf besteht aus drei Prozessschritten:

1. Einlesen von Fachwerksdaten und Programmparametern
2. Berechnung der Halterung 1
3. Ausgabe der berechneten Halterungsdaten in einem geeigneten Datenformat

**Schritt 1:** Einlesen von Fachwerksdaten und Programmparametern

Lediglich für diesen Schritt muss der Anwender Daten bereitstellen. Die Eingabe der Strukturdaten kann beispielsweise in folgendem Format erfolgen:

| NR_VERTICES | | 5 |
|---|---|---|
| 0.0 | 0.0 | 0. 0 |
| 1.0 | 0.0 | 0. 0 |
| 0.0 | 1.0 | 0. 0 |
| -1.0 | 0.0 | 0. 0 |
| 0.0 | -1.0 | 0. 0 |

| NR_EDGES | 4 |
|---|---|
| 0 | 1 |
| 0 | 2 |
| 0 | 3 |
| 0 | 4 |

Das Berechnungsprogramm erhält hierdurch die Information, dass das Fachwerk 5 Knoten besitzt, deren Koordinaten in der Folge angegeben sind, und dass das Fachwerk vier Kanten besitzt. Im Beispiel ist der Knoten mit Index "0" mit den Knoten durch Stäbe verbunden, die die Indices 1, 2, 3 und 4 besitzen.

In ähnlicher Form werden nun die Querschnittsform und Abmessungen der Stäbe, Lochtiefe und minimale Dicke der Halterung 1 angegeben. Im Beispiel sollen alle Stäbe die gleiche Form besitzen (rund, Radius 5 mm), die Lochtiefe soll jeweils 45 mm betragen. Die minimale Wanddicke der Halterung 1 wird mit 5 mm vorgegeben, außerdem soll der Lochrand eine Fase von 1 mm Breite erhalten.

Als Programmparameter werden noch die Koeffizienten der Summenformel für das Linienpotential (Formel F9) eingegeben, beispielsweise $\eta_1 = 0$, $\eta_2 = 1$, $\eta_3 = 0$ und $\eta_4 = 0$.

Das Programm liest diese Daten ein, womit Schritt 1 abgeschlossen ist.

**Schritt 2:** Durchführung der Berechnung

Nach dem Einlesen der Daten wird programmintern eine Datenstruktur angelegt, die die Fachwerksstruktur entsprechend der Eingabedaten beschreibt. Im Beispiel existiert mit Knoten "Index 0" nur ein Knoten im Fachwerk, der mehr als einen Nachbarknoten besitzt und für den somit eine Halterung berechnet wird.

Besitzt ein Fachwerk mehr als einen Knoten, der mehr als einen Nachbarknoten besitzt, dann sind für dieses Fachwerk mehrere Halterungen erforderlich. Beispiele hierfür sind die Fachwerke in Fig. 2a bis Fig. 2d. Die Halterungen werden dann für jeden Knoten einzeln berechnet, wobei sich der Berechnungsablauf nicht von jenem unterscheidet, der hier für das kreuzförmige Fachwerk angegeben ist.

Wie beschrieben, wird durch Formel F9 ein Potential im gesamten Raum definiert, wobei Äquipotentialflächen die Fachwerksstäbe wie Zwiebelschalen umschließen. Die erste Aufgabe, die das Programm erfüllen muss, ist nun, jene Äquipotentialfläche zu ermitteln, durch die die Forderung der Halterungs-Mindestwanddicke erfüllt wird. Dies ist auf einfache Weise möglich, indem ein sehr feines Rechennetz generiert wird, das im entsprechenden Abstand zu den definierten Fachwerksstäben liegt. An irgendeiner Stelle auf diesem Netz ergibt sich bei der Berechnung der kleinste Potentialwert, und dieser Wert wird für die Festlegung der Äquipotentialfläche verwendet.

Da alle anderen Stellen im vorgegebenen Abstand zum Fachwerksstab keinen kleineren Potentialwert besitzen, kann die Halterungsdicke nirgends kleiner als der vorgegebene Mindestwert sein, denn das Potential nach (Formel F9) nimmt mit zunehmender Entfernung von den Fachwerkskanten ab.

Anschließend wird programmseitig die Äquipotentialfläche 6 berechnet, die durch zahlreiche Punkte gebildet wird, die alle denselben Potentialwert besitzen. Das Programm kann diese Aufgabe mit einem entsprechenden Netzgenerator erfüllen, der beispielsweise ein Dreiecksnetz generiert und die Koordinaten ausgehend von einfachen Ausgangswerten iterativ solange korrigiert, bis in allen Koordinaten des Netzes der gegebene Potentialwert vorliegt.

Um die Halterungsoberfläche abzuschließen, werden Übergangsflächen 7 mit Hilfe von Formel F10 berechnet und dem Netz hinzugefügt, außerdem werden Halterungslöcher 8 und Fasen 9 entsprechend der Eingabedaten im Netz ergänzt, das nun die Oberfläche der gesamten Halterung 1 beschreibt.

**Schritt 3:** Datenausgabe

Zur Visualisierung der Ergebnisse, vor allem aber zum Zweck der Fertigung werden die Daten des Oberflächennetzes in einem der gängigen Formate exportiert, beispielsweise im PLY- oder STL-Format.

Das Ergebnis der Beispielberechnung mit den oben angegebenen Eingabedaten ist in Fig. 7b dargestellt.

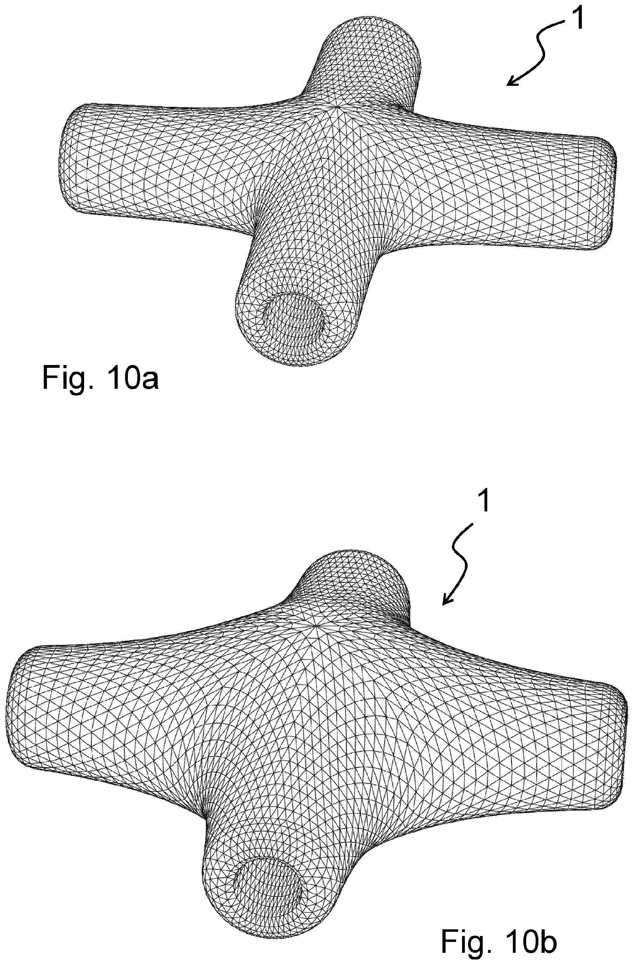

Die Halterung 1 erfüllt alle vorgegebenen Spezifikationen. Falls der Anwender es wünscht, kann er die Halterung in einem oder mehreren weiteren Programmläufen noch modifizieren, indem er die Koeffizenten der Summenformel für das Linienpotential (Formel F9) abändert und so eine schlankere oder dickere Halterung 1 erhält, vergleiche hierzu Fig. 10a und Fig. 10b; hierbei sind beliebige Abstufungen möglich. Vorliegend sind die Parameter für die schlanke Halterung 1 nach Fig. 10a zu $\eta_1 = 0$, $\eta_2 = 0$, $\eta_3 = 1$ und $\eta_4 = 0$ und für die voluminösere Halterung 1 nach Fig. 10b zu $\eta_1 = 0,98$, $\eta_2 = 0,02$, $\eta_3 = 0$ und $\eta_4 = 0$ bestimmt. Dabei unterscheidet sich das Volumen der verschiedenen Halterungen: Die Halterung 1 nach Fig. 7b hat ein Volumen von zirka 70 cm$^3$, die Halterung 1 nach Fig. 10a von knapp 55 cm$^3$ und die Halterung 1 nach Fig. 10b von knapp 83 cm$^3$. Würde man demgegenüber bei der Auslegung der Haltung 1 vom elektrischen Potential $V_{L,1}$ ausgehen ($\eta_1 = 1$, $\eta_2 = 0$, $\eta_3 = 0$ und $\eta_4 = 0$), hätte die Halterung 1 bereits ein deutlich größeres Volumen von etwa 116 cm$^3$.

Das Beispiel zeigt, dass für das Verfahren ausschließlich die notwendigsten Angaben vom Anwender bereitgestellt werden müssen. Die Berechnung der Halterungen 1 kann von einem Rechner vollautomatisch durchgeführt werden und ist üblicherweise im Bruchteil einer Sekunde abgeschlossen. Als Ergebnis des Verfahrens werden Dateien ausgegeben, die eine sofortige Fertigung durch unterschiedliche Verfahren ermöglichen, beispielsweise 3D-Druck, spanende Fertigung oder Herstellung mit Gussverfahren. Die fertigen Halterungen besitzen ein günstiges Verhältnis von Stabilität zu Materialaufwand, da Knicke mit den einhergehenden Kerbspannungen ebenso vermieden werden wie übermäßige Materialanhäufungen.

**Verzeichnis der Formelzeichen**

| | |
|---|---|
| $V_{P,1}$ | Potential einer Punktladung |
| $\pi$ | Kreiszahl $\pi$ |
| $\varepsilon$ | Dielektrizitätskonstante |
| $Q$ | Elektrische Ladung |
| $r$ | Abstand des Punktes, für den das Potential berechnet werden soll, zum Ort der Punktladung |
| $\kappa$ | Punktladungs-Parameter, identisch zu $Q/(4\pi\varepsilon_0)$ |
| $V_{L,1}$ | Potential einer Linienladung, berechnet für $V_P \sim 1/r$ |
| $L$ | Länge der Linienladung |
| $x$ | Koordinatenwert des Punktes, für den das Potential berechnet werden soll, gemessen in Achsrichtung des Linienleiters (axial), mit Bezugspunkt in Linienleiter-Mitte |
| $\rho$ | Koordinatenwert des Punktes, für den das Potential berechnet werden soll, gemessen senkrecht zur Achse des Linienleiters (radial) |
| $\zeta$ | Integrationsvariable |
| $ln$ | natürlicher Logarithmus |
| $V_{P,n}$ | Potential einer Punktladung, verallgemeinerte Form |
| $n$ | Exponent im allgemeinen Ansatz des Punktpotentials |
| $V_{L,n}$ | Linienladungs-Potential, berechnet für $V_P \sim 1/r^n$ |
| $V_{L,2}$ | Potential einer Linienladung, berechnet für $V_P \sim 1/r^2$ |
| $V_{L,3}$ | Potential einer Linienladung, berechnet für $V_P \sim 1/r^3$ |
| $V_{L,4}$ | Potential einer Linienladung, berechnet für $V_P \sim 1/r^4$ |
| $arctan$ | Arkustangens |
| $V_L$ | Potential einer Linienladung, berechnet als gewichtete Summe |
| $i$ | Index der Summanden |
| $\eta$ | Gewichtungsfaktor bei Summierung |
| $V_{L,i}$ | Linienladungs-Potential, berechnet für $V_P \sim 1/r^i$ |
| $a$ | Halbachsen-Parameter der Ellipse in $x$-Richtung |
| $b$ | Halbachsen-Parameter der Ellipse in $y$-Richtung |
| $x_0$ | Lageparameter der Ellipse in $x$-Richtung |
| $y_0$ | Lageparameter der Ellipse in $y$-Richtung |
| $y'_0$ | Steigungsparameter der Ellipse an der Stelle $(0, y_0)$ |
| $\varphi$ | vorgegebener Winkel bezüglich der Linienladung, unter dem ausgehend vom Koordinatenursprung ein Punkt auf der Übergangsellipse zu berechnen ist |
| $r_\varphi$ | Entfernung des Ellipsenpunktes zum Koordinatenursprung, dessen Verbindungsgerade zum Ursprung mit der Linienladung den Winkel $\varphi$ bildet |

**Patentansprüche**

1. Halterung (1) zum Verbinden von wenigstens drei Stäben (2) zu einem Stabfachwerk umfassend einen Körper (4) mit wenigstens drei zur Aufnahme der Stäbe (2) gebildeten Halterungslöchern (8), wobei die Halterungslöcher (8) eine zu einer Stabquerschnittsform korrespondierende Lochquerschnittsform und eine Lochtiefe aufweisen, die so bemessen ist, dass die Stäbe (2) positionsgenau an dem Körper (4) festlegbar sind, **dadurch gekennzeichnet,**

   **dass** eine Außenmantelfläche des Körpers (4) abschnittsweise durch eine Äquipotentialfläche (6) von Linienladungen, welche durch die Lage und die Stabquerschnittsform der an dem Körper (4) festgelegten Stäbe (2) definiert sind, beschrieben ist mit einem Linienpotential $V_L$, das aus einem erzeugenden Punktpotential

$$V_P \sim 1/r^n$$

   durch Integration gebildet ist, wobei $r$ der Abstand des Punktes, für den das Potential berechnet werden soll, zum Ort der Punktladung und $n \geq 1$ und $n$ ganzzahlig ist.

2. Halterung (1) nach Anspruch 1, **dadurch gekennzeichnet, dass** an die Äquipotentialfläche (6) des Körpers (4) anschließend eine zu den Halterungslöchern (8) geführte Übergangsfläche (7) vorgesehen ist, welche sich steigungsstetig an die Äquipotentialfläche (6) anschließt und an einem Lochrand endet.

3. Halterung (1) nach Anspruch 2, **dadurch gekennzeichnet, dass** die Übergangsfläche (7) elliptisch gebildet ist.

4. Halterung (1) nach einem der Ansprüche 1 bis 3, **dadurch gekennzeichnet, dass** an dem Halterungsloch (8) randseitig umlaufend eine Fase (9) gebildet ist, wobei die Fase (9) sich an die Übergangsfläche (7) anschließt.

5. Halterung (1) nach einem der Ansprüche 1 bis 4, **dadurch gekennzeichnet, dass** im Bereich der Äquipotentialfläche (6) und/oder der Übergangsfläche (7) Oberflächenverzierungselemente (10) vorgesehen sind.

6. Halterung (1) nach einem der Ansprüche 1 bis 5, **dadurch gekennzeichnet, dass** $n = 2$ oder $n = 3$ ist.

7. Halterung (1) nach einem der Ansprüche 1 bis 6, **dadurch gekennzeichnet, dass** der Körper (4) durch ein urformendes Fertigungsverfahren und/oder durch ein additives Fertigungsverfahren und/oder durch ein spanendes Fertigungsverfahren hergestellt ist.

8. Herstellverfahren für eine Halterung (1) nach einem der Ansprüche 1 bis 7 umfassend einen Körper (4) mit wenigstens zwei zur Aufnahme von Stäben (2) gebildeten Halterungslöchern (8) mit den folgenden Verfahrensschritten:

   - ein Fachwerk wird bestimmt, indem alle Fachwerksknoten (5) und die Lage, Anzahl und Stabquerschnittsform der zwischen den Fachwerksknoten (5) vorgesehenen Stäbe (2) festgelegt werden;
   - für das Fachwerk wird dann für Linienladungen, welche durch die Lage und die Stabquerschnittsform der an dem Körper (4) der Halterung (1) festgelegten Stäbe definiert sind, eine Äquipotentialfläche (6) berechnet, wobei ein Mindestabstand zwischen der Äquipotentialfläche (6) und einem beliebigen Stab (2) des Fachwerks vorgegeben und berücksichtigt wird;
   - dann werden Grenzen der Äquipotentialflächen (6) bestimmt;
   - es werden dann die sich an die Äquipotentialflächen (6) anschließenden Übergangsflächen (7) berechnet;
   - für jedes Halterungsloch (8) werden dann eine Lochquerschnittsform und eine Lochtiefe berechnet.

9. Herstellverfahren nach Anspruch 8, **dadurch gekennzeichnet, dass** nach der Berechnung der Lochquerschnittsform und/oder der Lochtiefe an der Äquipotentialfläche (6) und/oder den Übergangsflächen (7) Oberflächenverzierungselemente (10) vorgesehen werden.

10. Herstellverfahren nach Anspruch 8 oder 9, **dadurch gekennzeichnet, dass** nach der Bestimmung der Übergangsflächen (7) und bevorzugt vor der Bestimmung der Lochquerschnittsform und/oder der Lochtiefe für jedenfalls ein Halterungsloch (8) eine Fase (9) vorgesehen wird.

**Claims**

1. Connector (1) for connecting at least three rods (2) to form a lattice framework, comprising a body (4) having at least three connector holes (8) formed for receiving the rods (2), the connector holes (8) having a hole cross-sectional shape corresponding to a rod cross-sectional shape and a hole depth dimensioned in such a way that the rods (2) can be fixed precisely in position on the body (4), **characterised in that** an outer surface of the body (4) is described in sections by an equipotential surface (6) of line charges defined by the position and rod cross-sectional shape of the rods (2) fixed to the body (4), with a line potential $V_L$ found by integrating a generating point potential

$$V_P \sim 1/r^n,$$

where $r$ is the distance of the point for which the potential is to be calculated from the location of the point charge, and $n \geq 1$ and $n$ is an integer.

2. Connector (1) according to claim 1, **characterised in that** a transition face (7) guided with respect to the connector holes (8) is provided adjoining the equipotential surface (6) of the body (4), and adjoins the equipotential surface (6) at a constant gradient and ends at a hole edge.

3. Connector (1) according to claim 2, **characterised in that** the transition face (7) is formed elliptical.

4. Connector (1) according to any of claims 1 to 3, **characterised in that** a chamfer (9) is formed circumferentially at the edge of the connector hole (8), the chamfer (9) adjoining the transition face (7).

5. Connector (1) according to any of claims 1 to 4, **characterised in that** surface decoration elements (10) are provided in the region of the equipotential surface (6) and/or transition face (7).

6. Connector (1) according to any of claims 1 to 5, **characterised in that** $n = 2$ or $n = 3$.

7. Connector (1) according to any of claims 1 to 6, **characterised in that** the body (4) is produced by a casting production method and/or by an additive production method and/or by a machining production method.

8. Method for manufacturing a connector (1) according to any of claims 1 to 7, comprising a body (4) having at least two connector holes (8) formed for receiving rods (2), having the following method steps:

   - a framework is determined by establishing all framework nodes (5) and the position, number and rod cross-sectional shape of the rods (2) provided between the framework nodes (5);
   - subsequently, for line charges defined by the position and rod cross-sectional shape of the rods fixed to the body (4) of the connector (1), an equipotential surface (6) is calculated for the framework, while specifying and taking account of a minimum distance between the equipotential surface (6) and any given rod (2) of the frame work;
   - subsequently, boundaries of the equipotential surfaces (6) are determined;
   - subsequently, the transition faces (7) adjoining the equipotential surfaces (6) are calculated;
   - subsequently, a hole cross-sectional shape and a hole depth are calculated for each connector hole (8).

9. Method of manufacture according to claim 8, **characterised in that**, after the hole cross-sectional shape and/or hole depth have been calculated, surface decoration elements (10) are provided on the equipotential surface (6) and/or transition faces (7).

10. Method of manufacture according to either claim 8 or claim 9, **characterised in that**, after the transition faces (7) are determined and preferably before the hole cross-sectional shape and/or hole depth are determined for at least one connector hole (8), a chamfer (9) is provided.

**Revendications**

1. Fixation (1) pour relier au moins trois barres (2) en un treillis de barres, comprenant un corps (4) avec au moins trois trous de fixation (8) formés pour recevoir les barres (2), les trous de fixation (8) présentant une forme de section transversale de trou correspondant à une forme de section transversale de barre et une profondeur de trou qui est dimensionnée de manière à ce que les barres (2) puissent être fixées en position précise au corps (4), **caractérisée en ce qu'**une enveloppe de treillis extérieure du corps (4) est décrite par sections par une surface équipotentielle (6) de charges linéaires, qui sont définies par la position et la forme de section transversale de barre des barres (2) fixées au corps (4), avec un potentiel linéaire $V_L$ qui est formé par intégration à partir d'un potentiel ponctuel générateur

$$V_P \sim 1/r^n,$$

$r$ étant la distance entre le point pour lequel le potentiel doit être calculé et le lieu de la charge ponctuelle et $n \geq 1$ et $n$ étant un nombre entier.

2. Fixation (1) selon la revendication 1, **caractérisée en ce qu'**il est prévu, se raccordant à la surface équipotentielle (6) du corps (4), une surface de transition (7) menant aux trous de fixation (8), qui se raccorde à la surface équipotentielle (6) selon une pente continue et se termine à un bord de trou.

3. Fixation (1) selon la revendication 2, **caractérisée en ce que** la surface de transition (7) est de forme elliptique.

4. Fixation (1) selon l'une des revendications 1 à 3, **caractérisée en ce qu'**un chanfrein (9) est formé sur le pourtour du bord du trou de fixation (8), le chanfrein (9) se raccordant à la surface de transition (7).

5. Fixation (1) selon l'une des revendications 1 à 4, **caractérisée en ce que** des éléments de décoration de surface (10) sont prévus dans la zone de la surface équipotentielle (6) et/ou de la surface de transition (7).

6. Fixation (1) selon l'une des revendications 1 à 5, **caractérisée en ce que** $n = 2$ ou $n = 3$.

7. Fixation (1) selon l'une des revendications 1 à 6, **caractérisée en ce que** le corps (4) est fabriqué par un procédé de fabrication par moulage et/ou par un procédé de fabrication additif et/ou par un procédé de fabrication par enlèvement de copeaux.

8. Procédé de fabrication d'une fixation (1) selon l'une des revendications 1 à 7 comprenant un corps (4) avec au moins deux trous de fixation (8) formés pour recevoir des barres (2), comprenant les étapes de procédé suivantes :

   - on détermine un treillis en définissant tous les noeuds de treillis (5) et la position, le nombre et la forme de section transversale de barre des barres (2) prévues entre les noeuds de treillis (5) ;
   - on calcule ensuite pour le treillis une surface équipotentielle (6) pour des charges linéaires qui sont définies par la position et la forme de section transversale de barre des barres fixées au corps (4) de la fixation (1), une distance minimale entre la surface équipotentielle (6) et une barre (2) quelconque du treillis étant donnée et prise en compte ;
   - on détermine ensuite les limites des surfaces équipotentielles (6) ;
   - on calcule ensuite les surfaces de transition (7) qui se raccordent aux surfaces équipotentielles (6) ;
   - pour chaque trou de fixation (8), on calcule ensuite une forme de section transversale de trou et une profondeur de trou.

9. Procédé de fabrication selon la revendication 8, **caractérisé en ce qu'**après le calcul de la forme de section transversale de trou et/ou de la profondeur de trou, des éléments de décoration de surface (10) sont prévus sur la surface équipotentielle (6) et/ou les surfaces de transition (7).

10. Procédé de fabrication selon la revendication 8 ou 9, **caractérisé en ce qu'**après la détermination des surfaces de transition (7) et de préférence avant la détermination de la forme de section transversale de trou et/ou de la profondeur de trou, on prévoit un chanfrein (9) pour au moins un trou de fixation (8).

Fig. 1

Fig. 2a

Fig. 2b

Fig. 2c

Fig. 2d

Fig. 3

Fig. 4

1

8

8

4

9

8

Fig. 5

Fig. 6a        Fig. 6b        Fig. 6c        Fig. 6d

EP 3 805 475 B1

Fig. 7a

Fig. 7b

Fig. 7c

Fig. 7d

Fig. 7e

Fig. 8

Fig. 9

Fig. 10a

Fig. 10b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017122415 A1
- US 3424178 A